# FASCICULE DE BREVET EUROPEEN

(11) **EP 0 473 495 B1**
(45) Date de publication et mention de la délivrance du brevet: **30.10.1996**
(21) Numéro de dépôt: 91402279.3
(22) Date de dépôt: 21.08.1991
(51) Int. Cl.: G01S 7/48

(54) **Procédé et dispositif télémétriques**
Verfahren und Gerät zur Entfernungsmessung
Distance measuring method and apparatus

(30) Priorité: 23.08.1990 FR 9010595
(43) Date de publication de la demande: 04.03.1992
(73) Titulaire: COMMISSARIAT A L'ENERGIE ATOMIQUE, 75015 Paris (FR)
(72) Inventeur: Besesty, Pascal, F-38410 Uriage (FR); Trystam Philippe, F-38120 Saint Egreve (FR)
(74) Mandataire: Signore, Robert

(56) Documents cités:
- EP-A- 0 066 888
- EP-A- 0 066 889
- DE-A- 2 036 335
- DE-A- 3 540 157
- US-A- 3 428 815

## Description

La présente invention a pour objet un procédé et un dispositif télémétriques. Elle s'applique notamment aux systèmes de détection, dans le domaine de la robotique mobile.

Pour être efficaces, certains types de robots mobiles ont besoin de pouvoir appréhender leur environnement sur des distances comprises entre 0,5 et 10 m. Pour cela, ces robots sont dotés d'un ou plusieurs télémètres qui permettent la reconstitution d'une image de l'environnement.

On connaît plusieurs types de télémètres. Un premier type effectue une triangulation pour déterminer la distance d'un point de référence à un point d'un objet. La triangulation consiste à mesurer l'angle formé par la direction d'un faisceau lumineux continu et la direction sous laquelle le point d'impact du faisceau sur l'objet est vu par un détecteur.

Réalisée de cette manière, la mesure de distance est précise mais présente un inconvénient majeur : elle ne possède qu'une faible profondeur de champ.

Un second type de télémètre connu effectue des mesures de déphasage entre un faisceau lumineux modulé émis vers une cible et un faisceau réfléchi par cette cible. La connaissance du déphasage permet de déterminer la distance séparant le télémètre de la cible.

Un inconvénient majeur de ce type de télémètre réside dans la détection de réflexions parasites provenant de trajets indirects du faisceau. En effet, le détecteur, du fait de sa grande ouverture, peut recueillir des faisceaux ayant subi de multiples réflexions sur la cible. Aussi, le déphasage mesure entre ces faisceaux parasites et le faisceau incident aboutit à des indications erronées concernant la distance à déterminer.

Un troisième type de télémètre connu, dit télémètre à temps de vol, utilise la mesure du temps d'aller et retour d'une impulsion lumineuse entre le télémètre et la cible pour déterminer la distance les séparant (ce qui est possible car, bien entendu, on connaît la vitesse de la lumière).

Ce type de télemètre permet de s'affranchir des phénomènes de diffusion et de réflexions mutiples. En effet, la détermination du temps de parcours est stoppée lors de la première détection d'une impulsion lumineuse réfléchie (résultat du trajet le plus court) et le dispositif ne prend en compte aucune impulsion parasite arrivant ensuite. Avec un tel télémètre, on obtient une précision de quelques centimètres sur une distance d'une dizaine de mètres. Cette précision peut être encore améliorée en effectuant la moyenne d'un grand nombre de mesures concernant le même point d'impact. Mais cette amélioration est obtenue au détriment du temps de calcul.

Un premier problème des télémètres à temps de vol est pose par la dynamique très importante (elle peut atteindre 10⁷) des signaux lumineux détectés après une réflexion sur la cible. En effet, l'intensité de ces signaux est très intimement liée à la nature de la cible ; le coefficient de réflexion de cette dernière peut changer très brutalement d'un point à un autre.

Les systèmes électroniques du télémètre doivent pouvoir s'adapter à ces dispersions d'amplitude pour conserver une bonne précision sur la mesure du temps de trajet de l'impulsion lumineuse. Pour cela, on connaît des dispositifs de contrôle automatique de gain ou d'amplification logarithmique. Mais, outre la difficulté de mise en oeuvre de ces dispositifs, la fluctuation de leur temps de propagation en fonction de la dynamique des signaux détectés les rend inutilisables en télémétrie.

En télémétrie à temps de vol, un chronomètre est déclenché simultanément à l'émission d'une impulsion lumineuse ; ce chronomètre est stoppé, lorsqu'une impulsion réfléchie est détectée. Pour arrêter le chronomètre, on utilise couramment un comparateur qui émet un signal d'arrêt lorsqu'il reçoit un signal électrique correspondant à un signal lumineux supérieur à un seuil déterminé. Mais un tel comparateur présente une dispersion temporelle sur l'instant d'émission du signal d'arrêt, en fonction des caractéristiques de la détection (dynamique, rapport signal/bruit)ce qui diminue la précision de la mesure.

Le but de la présente invention est de permettre une mesure télémétrique du type "à temps de vol" avec une précision améliorée ; bien entendu, la moyenne d'un grand nombre de mesures affine encore le résultat.

Un autre but de la présente invention est de proposer un résultat fiable quelle que soit la dynamique du signal lumineux détecte.

Afin d'atteindre ces buts, l'invention préconise d'effectuer une mesure du temps de réponse des circuits électroniques mis en jeu lors de la détermination du temps de parcours de l'impulsion lumineuse émise puis détectée. Ce temps de réponse est déduit du temps de parcours pour le calcul de la distance. Cette correction apportée au temps de parcours permet d'ameliorer la précision sur la mesure de distance.

On connaît par EP-A-0 066 888, un procédé de mesure de la distance d'une cible et un appareil pour la mise en oeuvre de ce procédé. La distance d'une cible est déterminée à partir d'un temps de vol d'impulsions lumineuses de mesure émises, par un émetteur, en direction de la cible, réfléchies par cette dernière et captées par un récepteur. On engendre des impulsions lumineuses de référence et ces dernières sont transmises le long d'un chemin optique de référence établissant un temps de parcours prédéterminé de l'émetteur au récepteur et le temps de transit du signal de référence correspondant est mesuré. La valeur du temps de transit du signal de référence est soustraite de la valeur du temps de transit du signal de mesure.

Les impulsions lumineuses de mesure sont envoyées sur la cible à travers un atténuateur optique variable qui est réglé au cours d'essais qui précédent une mesure.

De manière plus précise, la présente invention concerne un procédé de télémétrie du type "à temps de vol", conformément à la revendication 1.

Dans l'invention, la d'étermination du temps de réponse est effectuée dans des conditions de puissance de réception qui sont identiques à celles de la mesure du temps d'aller et retour, c'est-à-dire que la seconde impulsion lumineuse détectée a les mêmes caractéristiques temporelles et d'amplitude que l'impulsion lumineuse réfléchie par l'objet. De cette façon, on s'affranchit des dispersions sur les signaux se propageant dans la chaine de mesure et causées par les différences d'intensité de l'impulsion lumineuse réfléchie par la cible.

De plus, dans la présente invention, on utilise seulement deux impulsions lumineuses ; ceci permet de faire rapidement une mesure et de s'affranchir des variations de position de l'objet et des vibrations de ce dernier.

De préférence, la seconde impulsion lumineuse est émise moins de 100 microsecondes après la première impulsion lumineuse. L'intervalle de temps séparant les deux impulsions lumineuses est par exemple inférieur à quelques dizaines de microsecondes, de préférence inférieur à 5 microsecondes. De cette manière, les variations de température des composants de la chaîne de mesure sont très faibles entre les deux émissions d'impulsions lumineuses.

Lors de la détermination du temps de réponse, on se place exactement dans les conditions de fonctionnement apparues lors de la mesure du temps d'aller et retour.

La présente invention concerne aussi un dispositif pour la mise en oeuvre du procédé objet de l'invention. Dans un mode de réalisation particulier du dispositif, ce dernier est conforme à la revendication 5.

Les premiers et les seconds moyens de détection peuvent comporter respectivement une première photodiode et une seconde photodiode. Selon un mode de réalisation avantageux, ces photodiodes sont identiques et, de préférence, montées sur un même support, afin d'éviter les dispersions temporelles intrinsèques des photodiodes.

Selon une réalisation particulière, les seconds moyens de détection comportent un moyen apte à recueillir un pourcentage déterminé de chaque impulsion lumineuse délivrée par les moyens prévus pour émettre des impulsions lumineuses.

Le moyen apte à recueillir un pourcentage déterminé de chaque impulsion lumineuse peut être une fibre optique.

Les caractéristiques et avantages de l'invention apparaîtront mieux après lecture de la description qui suit et qui est donnée à titre purement indicatif et nullement limitatif. Cette description se réfère à des dessins annexes, sur lesquels :
- la figure 1 représente schématiquement un dispositif conforme à l'invention,
- la figure 2 représente schématiquement un moyen de mesure temporelle utilisé dans ce dispositif conforme à l'invention.

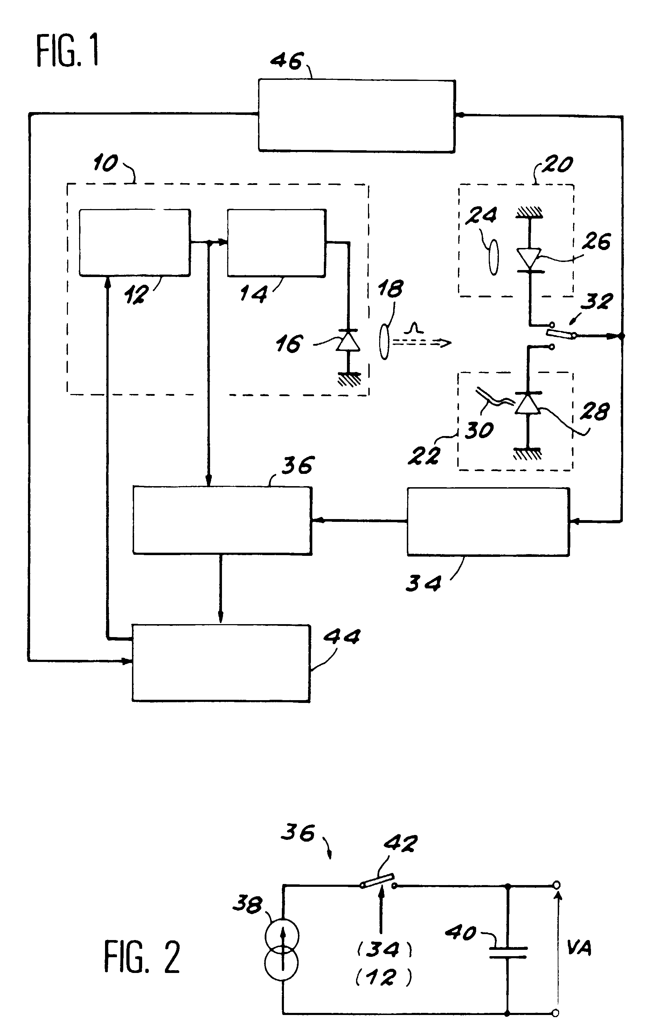

La figure 1 représente schématiquement un dispositif de télémètrie conforme à l'invention. Ce dernier, qui est destine à déterminé la distance qui sépare un objet (non représenté) de ce dispositif, comprend des moyens 10 pour émettre des impulsions lumineuses. Dans l'exemple représenté, ces moyens 10 comportent un générateur d'impulsions électriques 12 connecté à un circuit de commande 14 d'une diode laser 16 qui est destinée à émettre des impulsions lumineuses en direction de l'objet.

La précision de la mesure de distance dépend du temps de montée des impulsions lumineuses : plus ce temps de montée est court, meilleure est la précision. Pour former les impulsions lumineuses délivrées par la diode laser 16, on utilise donc des composants rapides.

Le générateur d'impulsions 12 est par exemple réalisé par un oscillateur à quartz délivrant un signal oscillant à une fréquence de 200 MHz et connecté à un circuit logique combinatoire qui délivre, lorsqu'il est déclenché par des moyens de traitement dont il sera question par la suite, une impulsion électrique d'environ 60 ns.

Le générateur d'impulsions 12 comprend encore un convertisseur numérique-analogique qui reçoit en entrée une consigne de puissance numérique et qui délivre en sortie cette consigne de puissance sous forme analogique. Simultanément, à la délivrance d'une impulsion électrique, le générateur d'impulsions 12 émet un signal de déclenchement sur une sortie. L'utilité de ce signal de déclenchement sera vue plus loin.

Sous l'effet de l'impulsion électrique délivrée par le générateur 12, le circuit de commande 14 délivre un courant qui alimente la diode laser 16. L'intensité de ce courant est fonction de la consigne de puissance. Le circuit de commande 14 est lui aussi réalisé avec des composants rapides permettant des temps de montée à la valeur nominale du courant de sortie de l'ordre de 1,3 ns ou moins et permettant de produire des impulsions lumineuses de caractéristiques temporelles identiques quelles que soient leurs amplitudes. Ces composants sont par exemple à base d'arséniure de gallium (AsGa) et réalisés dans la technologie des circuits de logique à couplage d'émetteur dite ECL ("Emitter coupled logic" en terminologie anglo-saxonne).

La diode laser 16 est par exemple du type SLD 202V-3 commercialise par la Société SONY. Elle délivre des impulsions lumineuses de durée égale à la durée de l'impulsion fournie par la sortie du générateur 12. Les impulsions lumineuses émises par la diode 16 sont focalisées par un objectif 18 qui peut être une simple lentille.

Le dispositif comprend encore des premiers et des seconds moyens de détection, référencés respectivement 20 et 22. Comme on peut le voir sur la figure 1, les premiers moyen de détection 20 comprennent un objectif 24, qui peut être une simple lentille et qui est disposé devant une photodiode 26, par exemple du type PIN à avalanche.

Cette photodiode 26 est destinée à recevoir la lumière réfléchie par l'objet lorsque celui-ci a reçu une impulsion lumineuse émise par la diode 16.

Les seconds moyens de détection 22 comprennent eux aussi une photodiode 28, par exemple du type PIN à avalanche. Les photodiodes 26, 28 sont choisies de manière à présenter des caractéristiques optoélectroniques identiques. La photodiode 28 est couplée à une extrémité d'une fibre optique 30 dont l'autre extrémité est disposée à proximité de la sortie des moyens 10 pour émettre des impulsions lumineuses. De cette manière, la photodiode 28 recueille un pourcentage déterminé de chaque impulsion lumineuse délivrée.

Un commutateur 32 réalisé par exemple dans une technologie à base d'arséniure de gallium permet de connecter soit les premiers moyens de detection 20, soit les seconds moyens de détection 22 au reste du circuit électrique.

Des moyens de commande d'arrêt 34 sont relies au commutateur 32. Ils comprennent par exemple un comparateur (non représenté) réalisé par exemple en technologie à base d'arséniure de gallium et des circuits périphériques de commande (non représentés) réalisés par exemple en technologie ECL.

Ces circuits périphériques permettent d'assurer la compatibilité des signaux provenant des circuits réalisés dans des technologies différentes et, par ailleurs, de gérer le cycle de déroulement de la mesure (commande du commutateur 32,...) tout en tenant compte des ordres du tir.

Des moyens de mesure temporelle 36 sont connectés par une entrée à la sortie du générateur d'impulsions 12 qui délivre un signal de déclenchement et par une autre entrée à une sortie des moyens de commande d'arrêt.

Les moyens de mesure temporelle sont avantageusement réalisés au moyen d'un convertisseur temps-amplitude du type de celui qui est représenté schématiquement sur la figure 2. Un tel convertisseur 36 comprend un générateur de courant constant 38 qui charge un condensateur à droite de charge linéaire 40 tant que l'interrupteur 42 est fermé.

La fermeture de l'interrupteur 42 est commandée par le signal de déclenchement délivré par le générateur d'impulsions 12. Son ouverture est commandée par le signal d'arrêt délivré par les moyens de commande d'arrêt 34.

Lorsque l'interrupteur 42 est ouvert, la tension VA aux bornes du condensateur 40 est proportionnelle à la durée pendant laquelle l'interrupteur 42 est resté fermé.

Cette tension VA est lue par des moyens de traitement 44, par exemple du type microprocesseur. Ces moyens 44 sont aptes à effectuer diverses opérations et à délivrer un signal de déclenchement pour la délivrance d'une impulsion électrique par le générateur d'impulsions 12 et un signal de consigne de puissance à l'intention du convertisseur numérique analogique du générateur 12.

Tout en restant dans le cadre de l'invention, on peut utiliser d'autres types de moyens de mesure temporelle. On peut citer par exemple un dispositif de comptage comprenant une horloge délivrant des impulsions d'horloge, et un compteur apte à compter ces impulsions entre le déclenchement et l'arrêt.

On peut citer encore un système de chronométrie avec vernier. Dans ce cas, deux horloges émettent des impulsions d'horloge déphasées les unes par rapport aux autres. Comme précédemment, on compte les impulsions d'horloge pendant la durée comprise entre le déclenchement et l'arrêt. On peut donc voir une mesure temporelle à la précision du déphasage, tout en utilisant des horloges de fréquence plus basse que dans le dispositif précédent.

De retour à la figure 1, on voit que des moyens de mesure de puissance 46 sont aussi reliés au commutateur 32 et, en sortie, à une entrée des moyens d'analyse et de traitement 44.

Pour effectuer une mesure de la distance séparant le dispositif de télémétrie à temps de vol d'un objet (non représenté), on chronomètre la distance d'aller et retour d'une impulsion lumineuse émise par la diode laser 16 en direction de l'objet. Les moyens de traitement 44 émettent un signal de commande accompagné d'une consigne de puissance pour déclencher l'émission d'une impulsion électrique par le générateur d'impulsions 12.

L'émission de cette impulsion électrique engendre la délivrance d'une impulsion lumineuse à la puissance désirée. La puissance est choisie maximum pour cette première impulsion lumineuse. D'autre part, l'impulsion électrique déclenche les moyens de mesure temporelle 36.

Lors de cette mesure, le commutateur 32 relie les premiers moyens de détection 20 au reste du circuit. La détection d'une impulsion de lumière réfléchie par l'objet active les moyens de commande d'arrêt 34 qui délivrent un signal d'arrêt. Ce dernier stoppe la mesure temporelle qui est enregistrée par les moyens de traitement 44.

Simultanément, les moyens de mesure de puissance 46 effectuent une mesure de la puissance de l'impulsion lumineuse réfléchie.

La mesure temporelle ne rend pas parfaitement compte de la distance parcourue par l'impulsion lumineuse. En effet, la mesure temporelle comprend le temps d'aller et retour de l'impulsion lumineuse (temps de vol caractéristique de la distance à mesurer) mais aussi le temps de réponse de la chaîne de mesure optoélectronique comportant la photodiode 26, les moyens de commande d'arrêt 34 et les moyens de mesure temporelle 36. Le temps de réponse n'est pas un facteur fixe : il dépend, entre autres, de la puissance lumineuse détectée.

Conformément à l'invention, on détermine le temps de réponse de la chaîne de mesure, puis on le soustrait à la mesure temporelle effectuée. Ce temps de réponse est déterminé dans des conditions identiques à celles de la mesure du temps d'aller et retour.

Pour cela, la diode laser 16 émet une seconde impulsion lumineuse d'une puissance telle qu'on obtient le même niveau de détection et les mêmes conditions temporelles (temps de montée, durée), lors de la détection de la seconde impulsion lumineuse, que le niveau de détection et les conditions temporelles obtenus lors de la détection de l'impulsion lumineuse réfléchie. Une telle puissance lumineuse est obtenue grâce à la consigne de puissance délivrée par les moyens de traitement 44 en fonction de la puissance mesurée pour l'impulsion lumineuse réfléchie. La consigne de puissance tient compte de la proportion de lumière recueillie par les seconds moyens de détection 22.

L'émission de la seconde impulsion lumineuse déclenche les moyens de mesure temporelle 36. La seconde impulsion lumineuse est détectée, dès son émission, par les seconds moyens de détection 22 connectés maintenant au circuit par le commutateur 32.

Cette détection actionne les moyens de commande d'arrêt 34 dans les mêmes conditions que lors de la première mesure. Le signal d'arrêt délivre par les moyens de commande d'arrêt 34 stoppe la mesure temporelle effectuée par les moyens de mesure temporelle 36. La mesure temporelle ainsi réalisée correspond bien au temps de réponse de la chaîne de mesure dans des conditions identiques à celles de la mesure précédente.

Les moyens d'analyse et de traitement 44 enregistrent cette mesure du temps de réponse et la soustraient à la mesure du temps d'aller et retour pour obtenir un temps corrige qui prend aussi en compte d'autres facteurs correctifs constants (trajets optiques). Les moyens 44 calculent ensuite la distance recherchée à partir du temps corrigé.

La lecture de la puissance lumineuse effectuée lors de la détection de la seconde impulsion permet de s'assurer de l'identité des conditions de mesure.

La précision des distances calculées par le procédé et le dispositif conformes à l'invention équivaut sensiblement à la précision obtenue usuellement en moyennant un grand nombre de mesures. On comprend que si l'on effectue la moyenne d'un grand nombre de mesures obtenues par le procédé et le dispositif conformes à l'invention, on améliore d'autant cette précision.

Si l'on se contente de la précision obtenue avec une mesure unique, on gagne alors en temps de calcul. De cette manière, on réduit le temps nécessaire pour former une image obtenue en balayant le faisceau laser sur la cible suivant des lignes successives.

On notera que l'invention ne nécessite pas de réglage préalable de la puissance de la seconde impulsion lumineuse avant une mesure : au cours d'essais préliminaires, faits une fois pour toutes, on forme un tableau que l'on met en mémoire dans la chaîne de mesure et qui donne la valeur Pe2 de la puissance de la seconde impulsion lumineuse en fonction de la valeur Pr1 de la puissance lumineuse reçue par la chaîne, après émission de la première impulsion lumineuse, de telle manière que la valeur Pr2 de la puissance lumineuse reçue par la chaîne après émission de la seconde impulsion lumineuse soit égale à Pr1.

Ceci permet d'émettre la seconde impulsion lumineuse très peu de temps après l'émission de la première impulsion lumineuse.

## Revendications

1. Procédé de télémétrie du type « à temps de vol », pour déterminer la distance d'un objet au moyen d'une chaîne de mesure optoélectronique apte à mesurer un temps d'aller et retour d'une impulsion lumineuse émise en direction de l'objet, ce procédé comprenant les étapes suivantes :
• une première étape pour mesurer le temps d'aller et retour,
• une deuxième étape pour déterminer un temps de réponse de la chaîne de mesure optoélectronique,
• une troisième étape pour soustraire le temps de réponse au temps d'aller et retour mesuré pour obtenir un temps corrigé,
• une quatrième étape pour calculer la distance recherchée à partir du temps corrigé,
la détermination du temps de réponse étant effectuée dans des conditions de puissance de réception qui sont identiques à celles de la mesure du temps d'aller et retour, le procédé étant tel que la première étape comprend les étapes suivantes :
a)émettre une première impulsion lumineuse en direction de l'objet dont la distance est à déterminer, et simultanément, déclencher des moyens de mesure temporelle (36),
b)détecter à l'aide de moyens de détection (20, 22) une impulsion lumineuse réfléchie par l'objet,
c) à la suite de la détection effectuée à l'étape b), actionner des moyens de commande d'arrêt desdits moyens de mesure temporelle (36),
et que la deuxième étape, pour déterminer un temps de réponse de la chaîne de mesure comprenant les moyens de détection (20, 22), les moyens de mesure temporelle (36) et les moyens de commande d'arrêt (34), comprend les étapes suivantes :
d) émettre une seconde impulsion lumineuse, et simultanément, déclencher lesdits moyens de mesure temporelle (36), et
e) détecter la seconde impulsion lumineuse à l'aide des moyens de détection (20, 22),
f) à la suite de la détection de la seconde impulsion lumineuse, actionner lesdits moyens de commande d'arrêt desdits moyens de mesure temporelle (36), de manière à ce que la mesure effectuée corresponde au temps de réponse de la chaîne de mesure,
le procédé étant caractérisé en ce qu'il comprend aussi les étapes suivantes :
• la mesure de la puissance de l'impulsion lumineuse réfléchie par l'objet lors de la détection de la première impulsion lumineuse,
• le réglage de la puissance de la seconde impulsion lumineuse en fonction de la puissance de l'impulsion lumineuse réfléchie de manière à obtenir un même niveau de détection, lors de la détection de la seconde impulsion lumineuse, que celui qui est obtenu lors de la détection de l'impulsion lumineuse réfléchie par l'objet.

2. Procédé selon la revendication 1, caractérisé en ce que la seconde impulsion lumineuse est émise moins de 100 microsecondes après la première impulsion lumineuse.

3. Procédé selon la revendication 1, caractérisé en ce que la seconde impulsion lumineuse est émise moins de 5 microsecondes après la première impulsion lumineuse, pour déterminer la distance de l'objet dans le domaine de la robotique mobile.

4. Procédé selon la revendication 1, caractérisé en ce que la puissance de la seconde impulsion lumineuse est réglée au moyen d'un tableau qui est formé au cours d'essais préliminaire, faits une fois pour toutes, en ce que le tableau est mis en mémoire dans la chaîne de mesure et donne la valeur Pe2 de la puissance de la seconde impulsion lumineuse en fonction de la valeur Pr1 de la puissance lumineuse reçue par la chaîne, après émission de la première impulsion lumineuse, de telle manière que la valeur Pr2 de la puissance lumineuse reçue par la chaîne après émission de la seconde impulsion lumineuse soit égale à Pr1.

5. Dispositif de télémétrie du type « à temps de vol », pour déterminer la distance d'un objet et pour la mise en oeuvre du procédé selon la revendication 1, qui comporte :
• des moyens d'émission (10) prévus pour émettre des impulsions lumineuses et délivrant sur une sortie un signal de déclenchement à chaque impulsion lumineuse émise,
• des premiers moyens (20) de détection,
• des moyens de commande d'arrêt (34) délivrant sur une sortie un signal d'arrêt, reliés auxdits moyens de détection,
• des moyens de mesure temporelle (36) connectés par une entrée à ladite sortie des moyens (10) prévus pour émettre des impulsions lumineuses, et par une autre entrée à ladite sortie des moyens de commande d'arrêt (34), ces moyens de mesure temporelle (36) délivrant sur une sortie un signal représentant une durée mesurée entre le déclenchement et l'arrêt,
• des moyens de traitement (44) connectés par une entrée à la sortie des moyens de mesure temporelle (36), ces moyens de traitement (44) étant aptes à, au moins, enregistrer des mesures effectuées par les moyens de mesure temporelle (36), soustraire ces mesures entre elles et déterminer une distance à partir d'une mesure temporelle, de manière à (a) mesurer un temps d'aller et retour d'une première impulsion lumineuse émise par les moyens d'émission (10) émise en direction de l'objet, une impulsion lumineuse réfléchie par l'objet étant détectée par les premiers moyens de détection (20), (b) déterminer un temps de réponse du dispositif au moyen d'une deuxième impulsion lumineuse émise par les moyens d'émission (10) et détectée par les seconds moyens de détection (22), (c) soustraire le temps de réponse du temps d'aller et retour pour obtenir un temps corrigé et (d) calculer la distance recherchée au moyen du temps corrigé,
le dispositif étant caractérisé en ce qu'il comprend aussi des seconds moyens (22) de détection, un commutateur (32) apte à connecter soit les premiers moyens de détection (20) soit les seconds moyens de détection (22) à une entrée des moyens de commande d'arrêt (34) et des moyens de mesure de puissance (46) connectés d'une part au commutateur (32) et d'autre part, en sortie, à une entrée des moyens de traitement (44), ces moyens de traitement (44) étant aptes à délivrer un signal de consigne de puissance en relation avec la mesure de puissance sur une sortie connectée à une entrée des moyens (10) prévus pour émettre des impulsions lumineuses.

6. Dispositif selon la revendication 5, caractérisé en ce que les premiers (20) et les seconds moyens de détection comportent respectivement une première photodiode (26) et une seconde photodiode (28) et en ce que ces photodiodes (26, 28) sont identiques.

7. Dispositif selon l'une quelconque des revendications 5 et 6, caractérisé en ce que les seconds moyens de détection (22) comportent un moyen (30) apte à recueillir un pourcentage déterminé de chaque impulsion lumineuse délivrée par les moyens (10) prévus pour émettre des impulsions lumineuses.

8. Dispositif selon la revendication 7, caractérisé en ce que le moyen apte à recueillir un pourcentage déterminé de chaque impulsion lumineuse est une fibre optique (30).

## Patentansprüche

1. Entfernungsmeßverfahren des "Flugzeit"-Typs, um den Abstand eines Objekts zu messen mittels einer optoelektronischen Kette, die eine Hin-und-zurück-Zeit eines in Richtung des Objekts ausgestrahlten Lichtimpulses messen kann, wobei dieses Verfahren die folgenden Schritte umfaßt:
. einen ersten Schritt, um die Hin-und-zurück-Zeit zu messen,
. einen zweiten Schritt, um eine Ansprechzeit der optoelektronischen Meßkette zu bestimmen,
. einen dritten Schritt des Subtrahierens der Ansprechzeit von der gemessenen Hin-und-zurück-Zeit, um eine korrigierte Zeit zu erhalten,
. einen vierten Schritt, um den gesuchten Abstand aufgrund der korrigierten Zeit zu erhalten,
wobei die Bestimmung der Ansprechzeit unter Empfangsleistungsbedingungen durchgeführt wird, die mit denen der Hin-und-zurück-Zeit-Messung identisch sind, und das Verfahren derart ist, daß der erste Schritt die folgenden Schritte umfaßt:
a) Ausstrahlen eines ersten Lichtimpulses in Richtung des Objekts, dessen Abstand zu bestimmen ist, und simultanes Auslösen der Zeitmeßeinrichtungen (36),
b) Detektieren eines durch das Objekt reflektierten Lichtimpulses mit Hilfe von Detektionseinrichtungen (20, 22),
c) Betätigen von Stopp-Steuereinrichtungen der besagten Zeitmeßeinrichtungen (36) nach erfolgter Detektion in Schritt b),
und daß der zweite Schritt des Bestimmens einer Ansprechzeit der Meßkette, welche die Detektionseinrichtungen (20, 22), die Zeitmeßeinrichtungen (36) und die Stopp-Steuereinrichtungen (34) enthält, die folgenden Schritte umfaßt:
d) Ausstrahlen eines zweiten Lichtimpulses und, simultan, Auslösen der Zeitmeßeinrichtungen (36), und
e) Detektieren des zweiten Lichtimpulses mit Hilfe der Detektionseinrichtungen (20, 22),
f) Betätigen der genannten Stopp-Steuereinrichtungen der Zeitmeßeinrichtungen (36), so daß die durchgeführte Messung der Ansprechzeit der Meßkette entspricht,
wobei das Verfahren **dadurch gekennzeichnet** ist, daß es außerdem die folgenden Schritte umfaßt:
. das Messen des durch das Objekt reflektierten Lichtimpulses bei der Detektion des ersten Lichtimpulses,
. die Regelung der Leistung des zweiten Lichtimpulses in Abhängigkeit von der Leistung des reflektierten Lichtimpulses, um bei der Detektion des zweiten Lichtimpulses ein gleiches Detektionsniveau zu erhalten, wie das, welches man erhält bei der Detektion des durch das Objekt reflektierten Lichtimpulses.

2. Verfahren nach Anspruch 1, dadurch gekennzeichnet, daß der zweite Lichtimpuls weniger als 100 Mikrosekunden nach dem ersten Lichtimpuls ausgestrahlt wird.

3. Verfahren nach Anspruch 1, dadurch gekennzeichnet, daß der zweite Lichtimpuls weniger als 5 Mikrosekunden nach dem ersten Lichtimpuls ausgestrahlt wird, um auf dem Gebiet der mobilen Robotik den Abstand des Objekts zu bestimmen.

4. Verfahren nach Anspruch 1, dadurch gekennzeichnet, daß die Leistung des zweiten Lichtimpulses geregelt wird mittels einer Tabelle, die gebildet wird im Laufe von vorausgehenden Versuchen, ein für allemal gemacht, daß die Tabelle in der Meßkette abgespeichert wird und den Wert Pe2 der Leistung des zweiten Lichtimpulses in Abhängigkeit von dem Wert Pr1 der durch die Kette empfangenen Lichtleistung liefert, nach Austrahlung des ersten Lichtimpulses, so daß der Wert Pr2 der durch die Kette nach Ausstrahlung des zweiten Lichtimpulses empfangenen Lichtleistung gleich Pr1 ist.

5. Entfernungsmeßvorrichtung des "Flugzeit"-Typs zum Bestimmen des Abstands eines Objekts und zum Anwenden des Verfahrens nach Anspruch 1, umfassend:
. Emissionseinrichtungen (10), die vorgesehen sind, Lichtimpulse auszustrahlen und die bei jedem ausgestrahlten Lichtimpuls an einem Ausgang ein Auslösesignal liefern,
. erste Detektionseinrichtungen (20),
. Stopp-Steuereinrichtungen (34), die an einem mit besagten Detektionseinrichtungen verbundenen Ausgang ein Stopp-Signal liefern,
. Zeitmeßeinrichtungen (36), durch einen Eingang verbunden mit besagtem, zum Ausstrahlen der Lichtimpulse vorgesehenen Ausgang der Einrichtungen (10), und durch einen anderen Eingang mit besagtem Ausgang der Stopp-Steuereinrichtungen (34), wobei diese Zeitmeßeinrichtungen (36) auf einem Ausgang ein Signal liefern, das eine zwischen der Auslösung und dem Stopp gemessene Zeitdauer darstellt,
. Verarbeitungseinrichtungen (44), durch einen Eingang verbunden mit dem Ausgang der Zeitmeßeinrichtungen (36), wobei diese Verarbeitungseinrichtungen (44) wenigstens fähig sind, durch die Zeitmeßeinrichtungen (36) durchgeführte Messungen zu speichern, diese Messungen voneinander zu subtrahieren und ausgehend von einer Zeitmessung einen Abstand zu bestimmen, um
(a) eine Hin-und-zurück-Zeit eines ersten Lichtimpulses zu messen, ausgestrahlt durch die Emissioneinrichtungen (10) in Richtung Objekt, wobei ein durch das Objekt reflektierter Lichtimpuls durch die ersten Detektionseinrichtungen (20) detektiert wird,
(b) eine Antwortzeit der Vorrichtung zu bestimmen mittels eines zweiten Lichtimpulses, ausgestrahlt durch die Emissionseinrichtungen (10) und detektiert durch die zweiten Detektionseinrichtungen (22),
(c) die gesuchte Distanz mittels der korrigierten Zeit zu berechnen,
dabei ist diese Vorrichtung **dadurch gekennzeichnet,** daß sie ausserdem umfaßt: zweite Detektionseinrichtungen (22), einen Umschalter (32), der entweder die ersten Detektionseinrichtungen (20) oder die zweiten Detektionseinrichtungen (22) mit einem Eingang der Stopp-Steuereinrichtungen (34) verbindet, und Leistungsmeßeinrichtungen (46), einerseits verbunden mit dem Umschalter (32) und andrerseits, am Ausgang, mit einem Eingang der Verarbeitungseinrichtungen (44), wobei diese Verarbeitungseinrichtungen (44) fähig sind, in Verbindung mit der Leistungsmessung ein Leistungssollwertsignal an einem Ausgang zu liefern, der verbunden ist mit einem Eingang der zum Ausstrahlen der Lichtimpulse vorgesehenen Einrichtungen (10).

6. Vorrichtung nach Anspruch 5, dadurch gekennzeichnet, daß die ersten (20) und die zweiten Detektionseinrichtungen jeweils eine erste Photodiode (26) und eine zweite Photodiode (28) umfassen, und dadurch, daß diese Photodioden (26, 28) identisch sind.

7. Vorrichtung nach einem der Ansprüche 5 und 6, dadurch gekennzeichnet, daß die zweiten Detektionseinrichtungen (22) ein Mittel (30) umfassen, das einen bestimmten Prozentsatz von jedem Lichtimpuls auffangen kann, der durch die zum Ausstrahlen von Lichtimpulsen vorgesehenen Einrichtungen (10) geliefert wird.

8. Vorrichtung nach Anspruch 7, dadurch gekennzeichnet, daß das zum Auffangen eines bestimmten Prozentsatzes von jedem Lichtimpuls befähigte Mittel eine Lichtleitfaser (30) ist.

## Claims

1. Flight time telemetry process for determining the distance of an object by means of an optoelectronic measuring chain able to measure an outward and return time of a light pulse emitted in the direction of the object, said process having the following stages:
- a first stage for measuring the outward and return time,
- a second stage for determining a response time of the optoelectronic measuring chain,
- a third stage for subtracting the response time from the measured outward and return time for obtaining a corrected time,
- a fourth stage for calculating the sought distance from the corrected time,
the determination of the response time being carried out under reception power conditions identical to those of the outward and return time measurement, the process being such that the first stage comprises the following steps:
(a) emitting a first light pulse in the direction of the object whose distance is to be determined and simultaneously triggering time measuring means (36),
(b) detecting with the aid of detection means (20, 22) a light pulse reflected by the object,
(c) at the end of the detection performed in step (b), actuating stoppage control means of said time measuring means (36),
and that the second stage for determining a response time of the measuring chain having detection means (20, 22), the time measuring means (36) and the stoppage control means (34), comprises the following steps:
(d) emitting a second light pulse and simultaneously triggering said time measuring means and
(e) detecting the second light pulse with the aid of the detection means (20, 22),
(f) at the end of the detection of the second light pulse, actuating said stoppage control means of said time measuring means (36), so that the measurement performed corresponds to the response time of the measuring chain, the process being characterized in that it also comprises the following stages:
the measurement of the power of the light pulse reflected by the object during the detection of the first light pulse,
the regulation of the power of the second light pulse as a function of the power of the reflected light pulse, so as to obtain the same detection level during the detection of the second light pulse as that obtained during the detection of the light pulse reflected by the object.

2. Process according to claim 1, characterized in that the second light pulse is emitted less than 100 microseconds after the first light pulse.

3. Process according to claim 1, characterized in that the second light pulse is emitted less than 5 microseconds after the first light pulse in order to determine the distance of the object in the field of mobile robotics.

4. Process according to claim 1, characterized in that the power of the second light pulse is regulated by means of a table formed during preliminary tests and carried out once and for all, in that the table is stored in the measuring chain and gives the value (PE2) of the power of the second light pulse as a function of the value (PR1) of the light pulse received by the chain, following the emission of the first light pulse, so that the value (PR2) of the light pulse received by the chain after the emission of the second light pulse is equal to PR1.

5. Flight time telemetry apparatus for determining the distance of an object and for performing the process according to claim 1 incorporating:
- emission means (10) for emitting light pulses and supplying on an output an activation signal at each emitted light pulse,
- first detection means (20),
- stoppage control means (34) supplying on an output a stop signal connected to said detection means,
- time measurement means (36) connected by an input to said output of the means (10) for emitting light pulses and by another input to said output of the stoppage control means (34), said time measurement means (36) supplying on an output a signal representing a time measured between activation and stoppage,
- processing means (44) connected by an input to the output of the time measurement means (36), said processing means (44) being able to at least record measurements performed by the time measurement means (36), subtract said measurements from one another and determine a distance from a time measurement, so as
(a) to measure an outward and return time of a first light pulse emitted by the emission means (10) emitted in the direction of the object, a light pulse reflected by the object being detected by the first detection means (20),
(b) determining a response time of the apparatus by means of a second pulse emitted by the emission means (10) and detected by the second detection means (22),
(c) subtracting the response time from the outward and return time to obtain a corrected time and
(d) calculate the sought distance by means of the corrected time, the apparatus being characterized in that it also comprises second detection means (22), a switch (32) able to connect either the first detection means (20) or the second detection means (22) to an input of the stoppage control means (34) and power measuring means (46) connected on the one hand to the switch (32) and on the other, at the output, to an input of the processing means (44), the latter being able to supply a power reference signal related to the power measurement on an output connected to an input of the means (10) for emitting light pulses.

6. Apparatus according to claim 5, characterized in that the first (20) and second (22) detection means respectively incorporate a first photodiode (26) and a second photodiode (28), said photodiodes (26, 28) being identical.

7. Apparatus according to one of the claims 5 and 6, characterized in that the second detection means (22) incorporate a means (30) able to collect a given percentage of each light pulse supplied by the means (10) for emitting the light pulses.

8. Apparatus according to claim 7, characterized in that the means able to collect a given percentage of each light pulse is an optical fibre (30).
